# EUROPÄISCHE PATENTSCHRIFT

(11) **EP 3 219 592 B1**
(45) Veröffentlichungstag und Bekanntmachung des Hinweises auf die Patenterteilung: **21.08.2024**
(21) Anmeldenummer: 17155353.0
(22) Anmeldetag: 09.02.2017
(51) Int. Cl.: B62J 11/00, B62K 19/40, B25B 5/04, B62J 99/00, B62H 5/00

(54) **HALTERUNG**
MOUNT
FIXATION

(30) Priorität: 15.03.2016 DE 102016104798
(43) Veröffentlichungstag der Anmeldung: 20.09.2017
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A1- 1 973 313
- DE-A1- 102006 036 031
- DE-A1- 19 713 704
- US-A- 5 201 501
- US-A- 5 678 284
- US-A- 631 665
- US-A1- 2008 296 979
- US-A1- 2010 181 455

## Beschreibung

Die vorliegende Erfindung betrifft eine Halterung für ein Zweiradzubehör, insbesondere für ein Zweiradschloss, vorzugsweise für ein Faltschloss.

Eine Halterung für ein Mobiltelefon, die zwei vorgespannte Seitenklammern umfasst, ist aus EP 1 973 313 A1 bekannt. Eine kontaktlose Stromübertragungsvorrichtung, bei der ein aufzuladendes Gerät mittels vorgespannter Klammern positioniert und gehalten wird, ist aus US 2008/0296979 A1 bekannt. US 2008/296979 offenbart auch eine Halterung gemäß dem Oberbegriff von Anspruch 1.

Eine Vorrichtung zur Befestigung von Zubehör an Zweirädern, bei der ein Zubehör an einer Stange eingehängt und mittels eines vorgespannten Hebels verriegelt wird, ist aus DE 197 13 704 A1 bekannt. Eine Halteeinrichtung für kleine Gegenstände im Fahrgastraum eines Kraftfahrzeugs, bei der durch Aufsetzen eines Gegenstands auf eine Bodenplatte Klemmbacken zur Fixierung des Gegenstands gegen diesen verschwenkt werden, ist aus DE 10 2006 036 031 A1 bekannt.

Aufgrund des an einem Zweirad üblicherweise vergleichsweise eingeschränkten Stauraums ist es vorteilhaft, für manches Zubehör eine gesonderte Halterung vorzusehen. Insbesondere Schlösser zum Sichern des Zweirads im abgestellten Zustand müssen in der Regel stets mitgeführt werden. Sofern es sich dabei nicht um ein an dem Zweirad fest montiertes Schloss, etwa ein Rahmenschloss, handelt, kann daher für ein Schloss, oder aber auch für ein anderes lose mitgeführtes Zubehör, eine Halterung an dem Zweirad vorgesehen werden.

Wichtigste Aufgabe der Halterung ist dabei ein zuverlässiges Halten des darin aufgenommenen Zubehörs, damit es, insbesondere während der Fahrt, nicht verloren gehen kann und vor allem nicht die Sicherheit des Fahrers gefährdet (z.B. wenn es aus der Halterung fallend in die Speichen eines Rades geriete). Dabei ist es aber wünschenswert, wenn sowohl das Einsetzen des Zubehörs in die Halterung als auch das Entnehmen des Zubehörs aus der Halterung in besonders einfacher Weise möglich ist. Die Halterung sollte zudem möglichst kompakt sein, um an dem Zweirad ohne Beeinträchtigung des Fahrenden angebracht werden zu können.

Es ist bekannt, Zweiradschlösser dadurch an einem Zweirad zu befestigen, dass sie direkt an einer Halterung angeschlossen werden, also nur durch Aufschließen mittels des jeweiligen Schlüssels von der Halterung gelöst werden können. Die Halterung kann dazu beispielsweise einfach eine Öse bereitstellen, durch die das Schloss geführt und anschließend verschlossen wird. Während diese Art der Anordnung besonders zuverlässig gegen ein versehentliches Lösen gesichert ist, ist sie insbesondere für ein Faltschloss nicht geeignet. Denn anders als etwa bei einem Spiralschloss könnten bei einem Faltschloss die Stäbe des Faltschlosses, wenn sie nicht in irgendeiner Weise in zusammengelegtem Zustand gehalten werden, unkontrolliert ausklappen, was beim Fahren eine Gefahr darstellen könnte. Zudem ist ein solches Anschließen des Schlosses an das Zweirad insofern unkomfortabel, als das Schloss für seine Lagerung an dem Zweirad jeweils verschlossen und vor einer Nutzung wieder aufgeschlossen werden muss. Die Bedienung der Halterung ist aber umso komfortabler, je flüssiger der Bewegungsablauf beim Einsetzen und Entnehmen des Schlosses in die bzw. aus der Halterung sein kann.

Insofern ist es vorzuziehen, wenn das zu haltende Zubehör für seine Lagerung an dem Zweirad nicht eigens abgeschlossen oder geöffnet werden muss. Noch vorteilhafter ist es ferner, wenn auch die Halterung selbst nicht eigens abgeschlossen bzw. aufgeschlossen werden muss, sondern eher automatisch oder zumindest möglichst selbsttätig, insbesondere einen Nutzer der Halterung unterstützend, zwischen einem Zustand, der ein Einsetzen des Zubehörs in die Halterung bzw. ein Entnehmen des Zubehörs aus der Halterung ermöglicht, und einem Zustand, in dem das in der Halterung aufgenommene Zubehör gegen ein Entnehmen aus der Halterung gesperrt ist, verstellbar ist.

Es ist eine Aufgabe der Erfindung, eine Halterung für ein Zweiradzubehör bzw. ein Zweiradzubehör mit einer Halterung bereitzustellen, die kompakt und komfortabel bedienbar ist und zugleich eine hohe Zuverlässigkeit beim Halten des Zweiradzubehörs an einem Zweirad bietet.

Die Aufgabe wird gelöst durch eine Halterung mit den Merkmalen des Anspruchs 1.

Dabei umfasst die Halterung einen Grundkörper, durch den eine Anlagefläche definiert wird, an der das Zweiradzubehör anliegt, wenn es in der Halterung aufgenommen ist, sowie eine oder mehrere Schwenkklammern, die jeweils einen Halteschenkel sowie einen Hebelschenkel umfassen und über einen Totpunkt hinweg zwischen einer Freigabestellung und einer Sicherungsstellung um eine Schwenkachse schwenkbar sind, um in der Freigabestellung ein Aufnehmen des Zweiradzubehörs in die Halterung bzw. ein Entnehmen des Zweiradzubehörs aus der Halterung zu ermöglichen und in der Sicherungsstellung das Zweiradzubehör, wenn es in der Halterung aufgenommen ist, mittels des Halteschenkels gegen ein Entnehmen aus der Halterung zu sperren.

Insbesondere stellt der Grundkörper somit einen statischen Teil der Halterung dar, während die jeweiligen Schwenkklammern, d.h. die eine oder die mehreren Schwenkklammern, beweglich sind. Somit kann die Halterung dazu ausgebildet sein, mit dem Grundkörper an dem Zweirad, insbesondere einem Rahmen des Zweirades befestigt zu werden. Zudem wird durch den Grundkörper die genannte Anlagefläche zum Anlegen des Zweiradzubehörs definiert, so dass das Zubehör über den Grundkörper stabil und insbesondere in definierter Lage an dem Zweirad angeordnet werden kann.

Die Anlagefläche kann dabei als eine Oberfläche an dem Grundkörper ausgebildet sein. Sie kann aber auch lediglich insofern durch den Grundkörper definiert sein, als dieser eine (nicht zwangsläufig flächige und nicht zwangsläufig durchgehende) Struktur aufweist, an der das Zubehör angelegt werden kann. Eine solche Struktur kann beispielsweise lediglich Stützpunkte und/oder -kanten aufweisen, an denen das Zubehör, wenn es in der Halterung aufgenommen ist, abgestützt ist. Aus solchen Stützpunkten und/oder -kanten kann die Anlagefläche dann extrapoliert werden. Die Anlagefläche ist dabei vorzugsweise kontinuierlich und zumindest im Wesentlichen flächig, muss aber nicht exakt eben sein, sondern kann beispielsweise auch eine gewisse Krümmung, insbesondere parallel und/oder senkrecht zu einer Längsrichtung des Grundkörpers aufweisen, oder auf spezifische Weise an die Form des Zweiradzubehörs angepasst sein.

Die Schwenkbarkeit der jeweiligen Schwenkklammern ermöglicht (zumindest) zwei definierte Zustände der Halterung: In einem freigebenden Zustand, in dem sich die Schwenkklammern in ihrer jeweiligen Freigabestellung befinden, kann das Zweiradzubehör in die Halterung aufgenommen werden bzw., wenn es bereits in der Halterung aufgenommen ist, aus der Halterung entnommen werden. In einem sichernden Zustand, in dem sich die Schwenkklammern in ihrer jeweiligen Sicherungsstellung befinden, sind die Schwenkklammern so angeordnet bzw. ausgerichtet, dass das Zweiradzubehör, wenn es in der Halterung aufgenommen ist, dagegen nicht aus der Halterung entnommen werden kann, sondern von den Halteschenkeln der Schwenkklammern daran gehindert wird.

Dazu braucht die Halterung nicht zwangsläufig verschlossen zu werden, so dass das Zubehör vollständig von der Halterung umschlossen wird. Insbesondere ist auch ein Abschließen der Halterung, also ein gesondertes Sichern der Schwencklammern in der Sicherungsstellung, um sie gegen ein Schwenken in die Freigabestellung zu sperren, nicht erforderlich. Vielmehr können die Schwenkklammern in der Sicherungsstellung lediglich derart relativ zu dem in der Halterung aufgenommenen Zubehör angeordnet bzw. ausgerichtet sein, dass sie einer Bewegung des Zubehörs aus der Halterung heraus, insbesondere von der Anlagefläche des Grundkörpers weg, entgegenstehen. Vorzugsweise sind die Halteschenkel der Schwenkklammern, sofern mehrere Schwenkklammern vorgesehen sind, in der Sicherungsstellung voneinander beabstandet.

Aufgrund der beschriebenen Schwenkbarkeit der Schwenkklammern kann die Halterung als bistabiles System angesehen werden mit der Freigabestellung und der Sicherungsstellung der Schwenkklammern als den stabilen Stellungen und dem dazwischen befindlichen Totpunkt als der labilen Übergangsstellung des Systems. Da ein Übergang aus der Freigabestellung in die Sicherungsstellung und umgekehrt aus der Sicherungsstellung in die Freigabestellung jeweils über den Totpunkt verläuft, sind die Schwenkklammern durch den Totpunkt gegen ein versehentliches Verstellen, etwa infolge von Erschütterungen während des Fahrens, geschützt und insofern stabilisiert.

Ein wesentlicher Aspekt der Erfindung ist dabei, dass eine den jeweiligen Hebelschenkel beaufschlagende Federvorrichtung vorgesehen ist, die dazu ausgebildet ist, die jeweilige Schwenkklammer auf einer Seite des Totpunkts in die Freigabestellung und auf der anderen Seite des Totpunkts in die Sicherungsstellung vorzuspannen. Der genannte Totpunkt wird also ganz wesentlich mittels der genannten Federvorrichtung realisiert. Vorteilhafterweise wirkt die Federvorrichtung dabei gerade derart, dass die von ihr auf die jeweilige Schwenkklammer ausgeübten Kräfte die Schwenkklammer in Abhängigkeit davon, ob sie sich (bezogen auf den Verlauf ihrer Schwenkbarkeit) auf der einen oder der anderen Seite des Totpunkts befindet, in die Freigabestellung oder aber in die Sicherungsstellung vorspannen.

Umgekehrt betrachtet, wird der Totpunkt gerade durch diese Eigenschaft der Federvorrichtung definiert, nämlich als diejenige Stellung der jeweiligen Schwencklammer, in der ein Wechsel der Richtung erfolgt, in welche die Federvorrichtung die jeweilige Schwenkklammer vorspannt.

Dabei beaufschlagt die Federvorrichtung den Hebelschenkel, vorzugsweise jedoch nicht den Halteschenkel der jeweiligen Schwenkklammer. Während der Halteschenkel somit vor allem dazu dient, das in der Halterung aufgenommene Zubehör in der Sicherungsstellung der jeweiligen Schwenkklammer gegen ein Entnehmen aus der Halterung zu sperren, kann der Hebelschenkel der jeweiligen Schwenkklammer insbesondere als Angriffspunkt für die Vorspannung durch die Federvorrichtung dienen. Dabei sind der Hebelschenkel und der Halteschenkel der jeweiligen Schwenkklammer vorzugsweise derart, insbesondere starr, miteinander verbunden, dass eine Krafteinwirkung auf den Hebelschenkel in bezüglich der Schwenkachse umlaufende Richtung vom Hebelschenkel auf den Halteschenkel übertragen wird, so dass der Halteschenkel (im Rahmen seiner Schwenkbarkeit) um die Schwenkachse geschwenkt wird.

Als Schenkel einer jeweiligen Schwenkklammer ist dabei vorzugsweise ein sich ausgehend von der Schwenkachse erstreckender Abschnitt der Schwenkklammer zu verstehen. Der Halteschenkel und der Hebelschenkel einer jeweiligen Schwenkklammer sind dabei insbesondere voneinander separate derartige Abschnitte.

Die Halterung umfasst zwei Schwenkklammern, wobei die Federvorrichtung zwischen den Hebelschenkeln der zwei Schwenkklammern wirksam ist. Die Federvorrichtung kann dabei auch paarweise zwischen jeweils zwei Schwenkklammern der Halterung wirksam sein. Dass die Federvorrichtung zwischen zwei Hebelschenkeln wirksam ist, meint dabei, dass die Federvorrichtung bezüglich der Beaufschlagung des jeweils einen der zwei Hebelschenkel an dem anderen der zwei Hebelschenkel abgestützt ist.

Gemäß einer vorteilhaften Weiterbildung weist der jeweilige Hebelschenkel eine von der jeweiligen Schwenkachse wegweisende Beaufschlagungsfläche für die Beaufschlagung durch die Federvorrichtung auf. Wenn sich die Federvorrichtung gegen den Grundkörper der Halterung abstützt, kann die Federvorrichtung den Hebelschenkel insbesondere in Richtung eines größeren Abstands der Beaufschlagungsfläche des Hebelschenkels von einer an dem Grundkörper ausgebildeten Beaufschlagungsfläche, gegen die sich die Federvorrichtung abstützt, vorspannen.

Die Federvorrichtung ist bevorzugt zwischen den Beaufschlagungsflächen der Hebelschenkel der Schwenkklammern vorgesehen und spannt die Beaufschlagungsflächen als eine Druckfeder in Richtung voneinander weg vor. Bei einer solchen Ausführungsform weisen die Beaufschlagungsflächen der Hebelschenkel der beiden Schwenkklammern den geringsten Abstand zueinander insbesondere dann auf, wenn die Beaufschlagungsflächen bezogen auf die Schwenkachse der jeweiligen Schwenkklammer radial in Richtung der Schwenkachse der jeweils anderen Schwenkklammer weisen.

Da die Federvorrichtung als Druckfeder wirkt, welche die Beaufschlagungsflächen voneinander (bzw. die Beaufschlagungsfläche von dem Grundkörper) weg drängt, was in zwei unterschiedliche Schwenkrichtungen möglich ist, kann diese Stellung geringsten Abstands den genannten Totpunkt bilden. Von diesem Totpunkt aus nimmt der Abstand der Beaufschlagungsflächen sowohl in Richtung der Freigabestellung als auch in Richtung der Sicherungsstellung zu, was jeweils einer abnehmenden Federkraft der Druckfeder entspricht. Beim Schwenken der Schwencklammern aus der Freigabestellung oder der Sicherungsstellung in die jeweils andere Stellung wird somit jeweils zunächst der Abstand der Beaufschlagungsflächen gegen die zunehmende Federkraft der Druckfeder verringert, bis der Totpunkt erreicht wird. Hierzu muss folglich eine diese Federkraft übersteigende äußere Kraft aufgewandt werden. Nach Überwinden des Totpunkts unterstützt die Druckfeder dagegen das weitere Schwenken der Schwenkklammern, so dass die Schwenkklammern vom Totpunkt aus bis in die jeweilige Zielstellung ohne äußere Krafteinwirkung und insofern automatisch bereits durch die bloße Federvorspannung geschwenkt werden.

Gemäß einer Ausführungsform wird die Federvorrichtung durch zumindest eine Schraubenfeder, bevorzugt zwei benachbart angeordnete Schraubenfedern, gebildet. Dadurch können hinreichend hohe Kräfte zum Stabilisieren der Freigabestellung und der Sicherungsstellung bei geringem Bedarf an Bauraum erzielt werden. Vorzugsweise ist die jeweilige Beaufschlagungsfläche dabei mit zumindest einem Vorsprung versehen, der in eine jeweilige Schraubenfeder hineinragt, um die Schraubenfeder gegen ein seitliches Verrutschen zu sichern. Insbesondere kann die jeweilige Beaufschlagungsfläche für jede sie beaufschlagende Schraubenfeder jeweils einen Vorsprung aufweisen. Dies ermöglicht zugleich einen einfachen Zusammenbau der Schwenkklammern mit den Schraubenfedern sowie eine zuverlässige Lagesicherung der Schraubenfedern, damit sie in allen Schwenkstellungen von der Freigabestellung über den Totpunkt bis zur Sicherungsstellung verlässlich mit den Beaufschlagungsflächen zusammenwirken.

Des Weiteren ist es vorteilhaft, wenn der Hebelschenkel zumindest einer Schwenkklammer einen Auslöseabschnitt aufweist, der in der Freigabestellung sowie vorzugsweise auch in einer dem Totpunkt entsprechenden Stellung, nicht aber in der Sicherungsstellung der jeweiligen Schwenkklammer in Richtung von dem Grundkörper weg über die Anlagefläche hinaus vorsteht. Dass der Auslöseabschnitt über die Anlagefläche hinaus vorsteht, kann dann insbesondere zur Folge haben, dass der Auslöseabschnitt beim Anlegen des Zweiradzubehörs an die Anlagefläche von dem Zweiradzubehör beaufschlagt wird. Eine solche Beaufschlagung ist dann vorzugsweise in Richtung der Anlagefläche gerichtet, so dass der Auslöseabschnitt vorteilhafterweise zumindest so weit zurückgedrängt wird, dass er nicht länger über die Anlagefläche hinaus vorsteht.

Bei einer solchen Ausführungsform kann also durch das Aufnehmen des Zweiradzubehörs in die Halterung, insbesondere durch das dabei erfolgende Anlegen des Zubehörs an die Anlagefläche, ein Schwenken einer einen derartigen Auslöseabschnitt aufweisenden Schwenkklammer aus ihrer Freigabestellung in Richtung ihrer Sicherungsstellung ausgelöst werden. Wenn bei dem genannten Zurückdrängen des Auslöseabschnitts hinter die Anlagefläche zurück auch der Totpunkt der Schwenkbewegung überwunden wird, kann die Schwenkklammer anschließend selbsttätig lediglich aufgrund der Vorspannung durch die Federvorrichtung weiter bis in die Sicherungsstellung geschwenkt werden und wird dann vorzugweise von der Vorspannung zudem in dieser Stellung gehalten.

Bei einer solchen Ausführungsform können die Schwenkklammern folglich automatisch, also ohne etwa von Hand direkt betätigt zu werden, in die Sicherungsstellung versetzt werden, wenn das Zweiradzubehör in die Halterung eingesetzt wird, nämlich gerade dadurch, dass das Zweiradzubehör in die Halterung eingesetzt und dabei an die Anlagefläche angelegt wird. Auf diese Weise ist eine besonders komfortable Bedienung der Halterung möglich, da das Zweiradzubehör lediglich vollständig in die Halterung eingesetzt werden muss und dann darin gegen ein Entnehmen gesichert ist, ohne dass dafür ein separat auszuführender Sicherungsschritt, etwa ein Verschließen der Halterung oder ein gesondertes Betätigen eines Elements der Halterung, erforderlich wäre.

Umgekehrt kann der Auslöseabschnitt vorteilhafterweise bei einem Schwenken der jeweiligen Schwenkklammer aus der Sicherungsstellung in die Freigabestellung erneut durch die Anlagefläche hindurch über die Anlagefläche hinaus vorstehen, so dass das gegebenenfalls in der Halterung aufgenommene Zweiradzubehör von der Anlagefläche weggedrückt wird. Eine solche Beaufschlagung des Zweiradzubehörs wird ab dem Totpunkt noch durch die Vorspannung der Federvorrichtung unterstützt, so dass das Zubehör bei einem Aufschwenken der Schwenkklammern gegebenenfalls zumindest teilweise von der Anlagefläche weg vorspringt. Hierdurch kann die Entnahme des Zubehörs aus der Halterung vereinfacht werden, wodurch wiederum der Komfort bei der Bedienung der Halterung verbessert ist.

Gemäß einer vorteilhaften Weiterbildung steht der Auslöseabschnitt von einem zumindest vorwiegend radial zur jeweiligen Schwenkachse ausgerichteten Hebelabschnitt des jeweiligen Hebelschenkels in Umfangsrichtung vor, wobei, vorzugsweise, der Hebelabschnitt unabhängig von der Stellung der jeweiligen Schwencklammer unterhalb der Anlagefläche angeordnet ist. Insbesondere kann der jeweilige Hebelschenkel also gewinkelt mit dem sich radial erstreckenden Hebelabschnitt und dem sich zumindest im Wesentlichen rechtwinklig davon vorstehenden Auslöseabschnitt ausgebildet sein. Der Auslöseabschnitt steht dann in der Freigabestellung der jeweiligen Schwenkklammer bezüglich ihrer Schwenkachse zumindest im Wesentlichen in Umfangsrichtung über die Anlagefläche vor und wird also in entgegengesetzte Umfangsrichtung zurückgedrängt, wenn das Zweiradzubehör in die Halterung aufgenommen wird. Da Wechselwirkungen mit dem Zweiradzubehör somit zumindest im Wesentlichen in Umfangsrichtung erfolgen, wird vorteilhafterweise zum einen jeweils das Drehmoment um die Schwenkachse maximiert und zum anderen die radiale Beanspruchung der Schwenkachse minimiert.

Erfindungsgemäß ist vorgesehen, dass der jeweilige Hebelschenkel einen Mitnehmer aufweist, wobei der Mitnehmer des Hebelschenkels einer der Schwencklammern und der Mitnehmer des Hebelschenkels einer anderen der Schwencklammern derart, insbesondere lose, ineinandergreifen, dass bei einem Schwenken der einen Schwenkklammer die andere Schwenkklammer um denselben Winkel in entgegengesetzte Richtung geschwenkt wird. Mit anderen Worten sind diese beiden Schwenkklammern über ihre jeweiligen Mitnehmer zu gemeinsamem Schwenken in jeweils entgegengesetzte Richtung gekoppelt. Dabei wird vorzugsweise unabhängig davon, welche der Schwenkklammern geschwenkt wird, die jeweils andere Schwenkklammer mitgeführt. Auf diese Weise reicht es aus, eine dieser Schwenkklammern direkt zu betätigen, um zugleich beide zu verstellen.

Durch eine solche Kopplung kann gewährleistet werden, dass die Schwenkklammern jeweils einander entsprechende Stellungen einnehmen. Insbesondere befindet sich die eine der Schwenkklammern genau dann in ihrer Freigabestellung, in ihrer dem Totpunkt entsprechenden Stellung oder in ihrer Sicherungsstellung, wenn sich auch die andere der Schwenkklammern in ihrer Freigabestellung, in ihrer dem Totpunkt entsprechenden Stellung bzw. in ihrer Sicherungsstellung befindet.

Erfindungsgemäß umfasst der Mitnehmer des Hebelschenkels der einen Schwenkklammer zumindest einen bezüglich der jeweiligen Schwenkachse radialen Fortsatz, der mit zumindest einem radialen Fortsatz des Mitnehmers des Hebelschenkels der anderen Schwenkklammer derart zusammenwirkt, dass er diesen Fortsatz bei einem Verstellen in die Freigabestellung beaufschlagt und von diesem Fortsatz zu einem Verstellen in die Sicherungsstellung beaufschlagt werden kann. Die gegenseitige Beaufschlagung erfolgt dabei insbesondere jeweils in Umfangsrichtung bezüglich der Schwenkachsen der Schwenkklammern. Die Fortsätze können dabei wie Finger oder wie Segmente zweier Zahnräder ineinandergreifen. Vorzugsweise liegen jeweils zumindest ein Fortsatz der einen Schwenkklammer und zumindest ein Fortsatz der anderen Schwenkklammer in jeder möglichen Schwenkstellung der Schwenkklammern aneinander an, so dass die Schwenkbewegung einer dieser Schwenkklammern unmittelbar und im Wesentlichen ohne Spiel direkt zu einer entsprechenden Schwenkbewegung der jeweils anderen Schwenkklammer übertragen wird.

Des Weiteren ist es bevorzugt, wenn der jeweilige Halteschenkel gewinkelt ausgebildet ist und einen Radialabschnitt, der sich bezüglich der jeweiligen Schwenkachse in zumindest vorwiegend radiale Richtung erstreckt, sowie einen Tangentialabschnitt, der sich an einem distalen Ende des Radialabschnitts in zumindest vorwiegend tangentiale Richtung erstreckt, umfasst, um das Zweiradzubehör, wenn es in der Halterung aufgenommen ist, in der Sicherungsstellung der jeweiligen Schwenkklammer gegen ein Entnehmen aus der Halterung zu sperren.

Eine derart gewinkelte Ausbildung der Halteschenkel der Schwenkklammern hat den Vorteil, dass das in der Halterung aufgenommene Zweiradzubehör insbesondere durch die Tangentialabschnitte gegen ein Entnehmen aus der Halterung gesperrt werden kann. Wenn das Zweiradzubehör, etwa in Richtung weg von der Anlagefläche des Grundkörpers, gegen die Tangentialabschnitte gedrängt wird (beispielsweise durch Erschütterungen beim Fahren oder, wenn versucht wird, das Zubehör zu entnehmen, obwohl sich die Schwenkklammern in der Sicherungsstellung befinden), werden somit insbesondere Kräfte in bezüglich der jeweiligen Schwenkachse radialer Richtung auf die Schwenkklammern ausgeübt.

Dies ist insbesondere dann der Fall, wenn der jeweilige Tangentialabschnitt gemäß einer bevorzugten Weiterbildung in der Sicherungsstellung parallel zur Anlagefläche ausgerichtet ist. Derartige radiale Kräfte führen aber zu keinem Drehmoment um die Schwenkachse, so dass die Schwenkklammern hierdurch nicht geschwenkt werden, sondern in ihrer Sicherungsstellung verbleiben. Dies gilt umso mehr, wenn der Tangentialabschnitt vergleichsweise kurz ist, so dass eine Beaufschlagung durch das in der Halterung aufgenommene Zubehör nahe dem genannten Ende des Radialabschnitts erfolgt.

Eine gewinkelte Ausbildung des jeweiligen Halteschenkels ist insbesondere gegenüber einer bogenförmigen Ausbildung vorteilhaft, weil Kräfte, welche das Zweiradzubehör in Richtung eines Entnehmens aus der Halterung auf den jeweiligen Halteschenkel ausübt, bei einen bogenförmigen Halteschenkel eher zu einem die jeweilige Schwenkklammer in die Freigabestellung drängenden Drehmoment führen können und somit den sicheren Halt des Zubehörs in der Halterung gefährden. Bogenförmige Schwenkklammern müssten daher in der Sicherungsstellung zusätzlich gegen ein Aufschwenken gesichert werden, etwa indem ihre von der Schwenkachse weg weisenden Enden miteinander gekoppelt werden, so dass das Zubehör in der Halterung vollumfänglich umschlossen wird. Eine solche zusätzliche Sicherung ist bei der beschriebenen Halterung dagegen nicht erforderlich. Vielmehr kann es vorgesehen sein, dass die Halteschenkel der Schwencklammern auch in ihrer Sicherungsstellung voneinander beabstandet sind.

Gemäß einer bevorzugten Weiterbildung befindet sich der jeweilige Tangentialabschnitt in der Freigabestellung außerhalb eines Raums, der alle Punkte umfasst, die sich senkrecht über der Anlagefläche befinden. Mit anderen Worten geben die Tangentialabschnitte der Schwenkklammern in der Freigabestellung den gesamten Bereich oberhalb der Anlagefläche frei, damit das Zweiradzubehör in zumindest im Wesentlichen senkrechter Richtung zur Anlagefläche in die Halterung eingesetzt und an die Anlagefläche angelegt werden kann. In der Sicherungsstellung dagegen ragen die Halteschenkel vorzugsweise mit den Tangentialabschnitten in diesen Raum hinein, so dass sie eine umgekehrte Bewegung des Zubehörs von der Anlagefläche weg und aus der Halterung heraus blockieren.

Gemäß einer vorteilhaften Ausführungsform ist die tangentiale Erstreckung des jeweiligen Tangentialabschnitts kürzer als sein halber radialer Abstand von der jeweiligen Schwenkachse. Gemäß einer anderen Ausführungsform kann vorgesehen sein, dass sich der jeweilige Tangentialabschnitt über einen Winkelbereich von höchstens 30°, insbesondere von etwa 25°, um die jeweilige Schwenkachse erstreckt. Bei diesen Ausführungsformen ist die Erstreckung des jeweiligen Tangentialabschnitts in tangentialer bzw. in Umlaufrichtung bezüglich der jeweiligen Schwenkachse begrenzt und vergleichsweise kurz. Hierdurch kann zusätzlich sichergestellt werden, dass in der Sicherungsstellung der jeweiligen Schwenkklammer eine Beaufschlagung des Tangentialabschnitts in Richtung von der Anlagefläche weg zumindest im Wesentlichen eine bezüglich der Schwenkachse radiale Krafteinwirkung darstellt und somit zu keinem oder nur zu einem sehr geringen Drehmoment um die Schwenkachse führt.

Des Weiteren ist es vorteilhaft, wenn am Halteschenkel, insbesondere am Übergang zwischen dem Radialabschnitt und dem Tangentialabschnitt, Angriffsabschnitte ausgebildet sind, die sich vorzugsweise zumindest im Wesentlichen in radiale Richtung von der Schwenkachse weg erstrecken. Diese Angriffsabschnitt können als Vorsprünge ausgebildet sein und dienen vorteilhafterweise dazu, Angriffspunkte für eine manuelle Betätigung der Schwenkklammern zu bieten. Beispielsweise kann zum Schwenken der Schwenkklammern aus der Sicherungsstellung in die Freigabestellung (oder zumindest bis zum Totpunkt und geringfügig darüber hinaus) der Angriffsabschnitt zumindest einer der Schwenkklammern erfasst und in Richtung der Freigabestellung gedrückt werden. Insbesondere können die Angriffsabschnitte der zwei Schwenkklammern derart angeordnet sein, dass sie gleichzeitig voneinander weg gedrückt werden können, etwa durch Spreizen der Hand, wenn der eine Angriffsabschnitt mit dem Daumen und der andere mit zumindest einem der übrigen Fingern der Hand beaufschlagt wird.

Gemäß einer bevorzugten Ausführungsform umfasst die Halterung zwei Schwenkklammern, die derart aneinander zwangsgeführt sind, dass bei einem Schwenken der einen Schwenkklammer um ihre Schwenkachse die andere Schwenkklammer um deren Schwenkachse um denselben Winkel in entgegengesetzte Richtung geschwenkt wird. Eine solche Zwangsführung kann wie weiter oben erläutert durch das Zusammenwirken von Mitnehmern an Hebelschenkeln der Schwenkklammern erzielt werden. Grundsätzlich kommen jedoch auch andere Arten eines derart koordinierten Schwenkens der Schwenkklammern in Frage, etwa mittels einer Art Getriebe zwischen den Schwenkklammern, die dafür nicht unbedingt einen Hebelschenkel aufweisen müssen.

Bezogen auf sämtliche vorstehend beschriebenen Halterungen ist es ferner bevorzugt, wenn die jeweiligen Schwenkklammern zueinander baugleich sind und vorzugsweise zumindest zwei Schwenkklammern achssymmetrisch, insbesondere bezüglich einer senkrecht zur Anlagefläche ausgerichteten Spiegelachse, zueinander angeordnet sind. Durch eine baugleiche Ausführung der Schwenkklammern können die Kosten bei der Fertigung der Halterung verringert werden. Zudem kann sich der Zusammenbau der Halterung vereinfachen, da die Schwencklammern nicht unterschieden werden müssen.

Ferner ist die Schwenkachse der jeweiligen Schwenkklammer ortsfest, insbesondere relativ zu dem Grundkörper der Halterung. Im Gegensatz zu einer Lagerung der Schwenkklammern mit jeweils (elastisch) beweglicher Schwenkachse kann durch eine ortsfeste Verankerung eine größere Stabilität der Halterung erreicht werden, deren Grundkörper dann vorzugsweise ebenso wie die Schwenkklammern insbesondere aus einem im Wesentlichen inelastischen Material gefertigt sein kann.

Die Anlagefläche des Grundkörpers kann sich entlang einer Längsrichtung erstrecken. Darunter ist insbesondere zu verstehen, dass die für das Anlegen des Zweiradzubehörs an dem Grundkörper zur Verfügung stehende Fläche in die Längsrichtung eine größere Ausdehnung aufweist als quer zur Längsrichtung. Die Anlagefläche kann zudem zumindest im Wesentlichen symmetrisch zur Längsrichtung, d.h. zu einer zur Längsrichtung parallelen Symmetrieachse oder zu einer zur Längsrichtung parallelen und zur Anlagefläche zumindest im Wesentlichen senkrechten Symmetrieebene, ausgebildet sein.

Gemäß einer vorteilhaften Ausführungsform umfasst die Halterung eine Schwencklammer, welche die Anlagefläche in die Längsrichtung begrenzt. Eine solche Ausführungsform kann insbesondere vorteilhaft sein, wenn das Einsetzen des Zweiradzubehörs in die Halterung zumindest im Wesentlichen in Längsrichtung erfolgt, z.B. durch Einführen in einen taschen- oder köcherartigen Aufnahmebereich, so dass ein Entnehmen des Zweiradzubehörs in entgegengesetzte Längsrichtung durch die genannte Schwenkklammer blockiert werden kann.

Gemäß einer weiteren vorteilhaften Ausführungsform umfasst die Halterung zusätzlich oder alternativ zu der vorstehend beschriebenen Schwenkklammer zwei Schwenkklammern, welche die Anlagefläche quer zu der Längsrichtung flankieren. Dabei sind die Schwenkachsen der zwei Schwenkklammern vorzugsweise parallel zu dieser Längsrichtung ausgerichtet. Die Schwenkklammern können somit das in der Halterung aufgenommene Zweiradzubehör an zwei entgegengesetzten Seiten bezüglich der Längsrichtung umgreifen. Insbesondere können sich die Schwencklammern beim Schwenken in die Sicherungsstellung von zwei Seiten an und vorzugsweise zumindest zum Teil um das in der Halterung aufgenommene Zweiradzubehör legen (nämlich insbesondere in seitlicher Richtung mit dem genannten Radialabschnitt und in von der Anlagefläche weg weisender Richtung mit dem genannten Tangentialabschnitt des Halteschenkels der jeweiligen Schwenkklammer). Auf diese Weise kann das Zubehör in der Halterung besonders zuverlässig gegen ein Entnehmen gesichert werden.

Gemäß einer bevorzugten Weiterbildung weist der Grundkörper ferner einen Begrenzungsabschnitt auf, der von der Anlagefläche vorsteht und die Anlagefläche in Längsrichtung begrenzt. Der Begrenzungsabschnitt kann somit insbesondere eine Beweglichkeit des in die Halterung aufgenommenen Zweiradzubehörs entlang der Längsrichtung (zumindest in eine Richtung) beschränken. Dabei ist der Begrenzungsabschnitt vorzugsweise derart schalenartig ausgebildet, dass das Zweiradzubehör zum Anlegen an die Anlagefläche zunächst gewinkelt zur Anlagefläche mit einem Endabschnitt in den schalenartigen Begrenzungsabschnitt eingesetzt und anschließend zur Anlagefläche hin geschwenkt werden kann. Der Begrenzungsabschnitt kann insofern auch als Führung für eine korrekte Ausrichtung des Zweiradzubehörs beim Einsetzen in die Halterung dienen.

An dem Grundkörper kann ein weiterer Begrenzungsabschnitt vorgesehen sein, um die Anlagefläche auch in die entgegengesetzte Längsrichtung zu begrenzen. Je nach Ausrichtung der Halterung kann ein solcher weiterer Begrenzungsabschnitt vergleichsweise klein ausgebildet oder auch gänzlich entbehrlich sein, insbesondere wenn er bei typischer Anordnung der Halterung an dem Zweirad im Wesentlichen am oberen Ende des Grundkörpers angeordnet wäre. Denn in diese Richtung kann bereits die Schwerkraft ausreichen, zu verhindern, dass das Zweiradzubehör die Halterung verlässt, obwohl sich die Schwenkklammern in der Sicherungsstellung befinden.

Des Weiteren ist es bevorzugt, wenn der Grundkörper einen oder mehrere Führungsabschnitte aufweist, welche von der Anlagefläche vorstehen und die Anlagefläche zumindest abschnittsweise quer zur Längsrichtung begrenzen. Die Führungsabschnitte schränken folglich, gegebenenfalls zusätzlich zu den genannten die Anlagefläche flankierenden Schwenkklammern, eine Beweglichkeit des in die Halterung aufgenommenen Zweiradzubehörs in seitliche Richtung (d.h. quer zur Längsrichtung) ein. Da sie aber vorzugsweise im Gegensatz zu den Schwencklammern starr an dem Grundkörper angeordnet sind, können sie Kräfte, welche das Zubehör, etwa infolge von Erschütterungen beim Fahren, in seitliche Richtung auf die Halterung ausübt, aufnehmen und somit insbesondere dazu beitragen, dass derartige Kräfte die Schwenkklammern nicht aus der Sicherungsstellung in die Freigabestellung schwenken. Zudem können sie insbesondere zusammen mit dem genannten Begrenzungsabschnitt zur korrekten Ausrichtung des Zubehörs beim Einsetzen in die Halterung dienen, indem sie das Zubehör beim Anlegen an die Anlagefläche und/oder beim Einsetzen in den Begrenzungsabschnitt führen.

Die genannte Aufgabe der Erfindung wird ferner gelöst durch ein Zweiradzubehör, insbesondere ein Zweiradschloss, vorzugsweise ein Faltschloss, mit einer für das Zweiradzubehör geeignet ausgebildeten Halterung, die insbesondere nach einer der vorstehend beschriebenen Ausführungsformen ausgebildet ist.

Die Erfindung wird nachfolgend lediglich beispielhaft durch Bezugnahme auf die Figuren näher erläutert.
- Fig. 1: zeigt in perspektivischer Darstellung eine Ausführungsform einer erfindungsgemäßen Halterung mit Schwenkklammern in der Freigabestellung.
- Fig. 2: zeigt in perspektivischer Darstellung dieselbe Ausführungsform mit in der Halterung aufgenommenem Faltschloss und Schwenkklammern in der Sicherungsstellung.
- Fig. 3: zeigt in einer perspektivischen Schnittdarstellung dieselbe Ausführungsform mit Schwenkklammern in der Freigabestellung.
- Fig. 4: zeigt in einer perspektivischen Schnittdarstellung dieselbe Ausführungsform mit in der Halterung aufgenommenem Faltschloss und Schwenkklammern in der Sicherungsstellung.
- Fig. 5: zeigt dieselbe Ausführungsform in einer Ansicht von der Seite.
- Fig. 6: zeigt eine alternative Ausführungsform in einer Ansicht von der Seite mit Schwenkklammer in der Freigabestellung.
- Fig. 7: zeigt die alternative Ausführungsform in einer Ansicht von der Seite mit Schwenkklammer in der Sicherungsstellung.

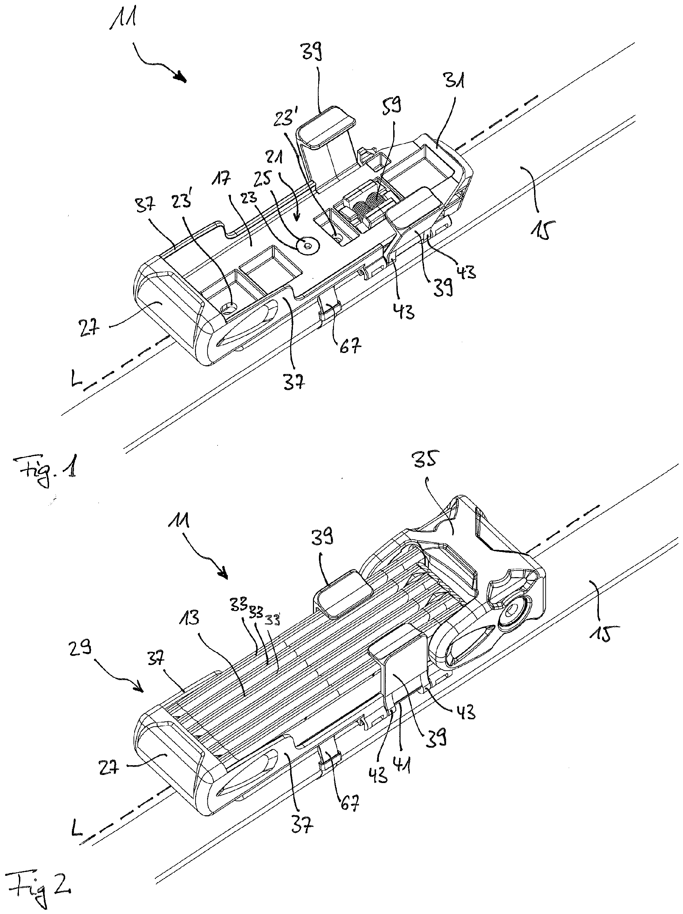

In den Fig. 1 bis 5 ist jeweils dieselbe Ausführungsform einer erfindungsgemäßen Halterung 11 dargestellt. Die Halterung 11 ist für ein Faltschloss 13 geeignet ausgebildet, d.h. dass das Faltschloss 13 zu seiner Lagerung an einem Zweirad (von dem in den Fig. 1, 2 und 5 ein Rahmenrohr 15 gezeigt ist) in die an dem Zweirad befestigte Halterung 11 aufgenommen und dann von der Halterung 11 zuverlässig gehalten werden kann.

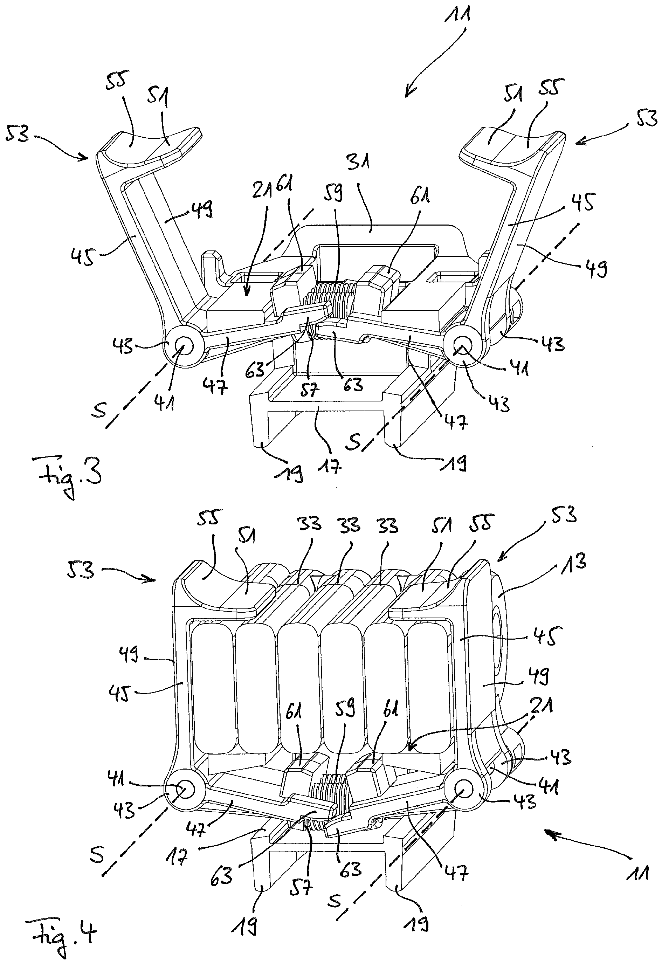

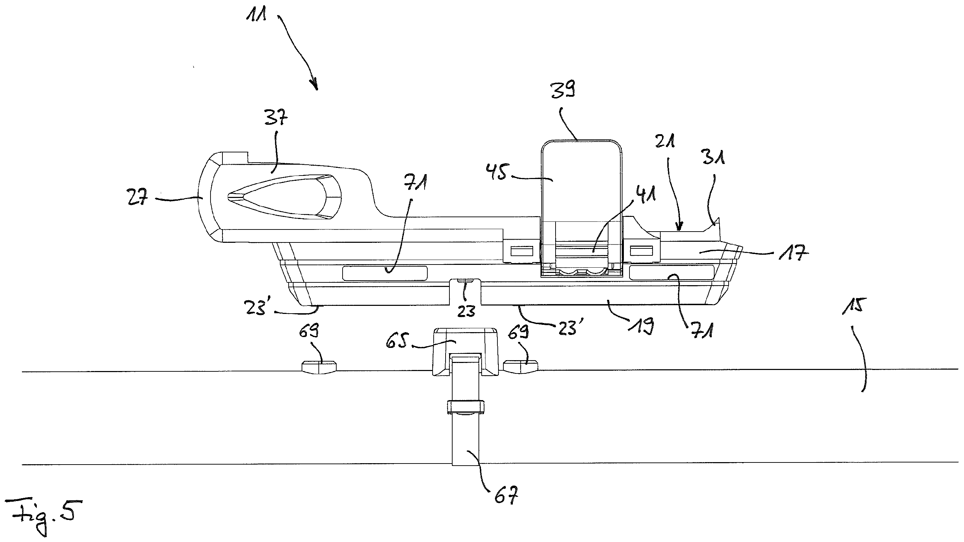

Wie insbesondere in Fig. 1 zu erkennen ist, umfasst die Halterung 11 einen Grundkörper 17, der sich entlang einer Längsrichtung L erstreckt. Eine Rückseite des Grundkörpers 17 ist dazu ausgebildet, an das Rahmenrohr 15 eines Zweirades angebracht zu werden. Dazu sind an der Rückseite zwei Stege 19 ausgebildet, die sich parallel zueinander und zur Längsrichtung L erstrecken (vgl. Fig. 3 und 4) und mit denen der Grundkörper an das Rahmenrohr 15 angelegt werden kann. Verschiedene Arten der Befestigung der Halterung 11 an dem Zweirad, insbesondere an dem Rahmenrohr 15, werden weiter unten in Bezug auf Fig. 5 erläutert.

An einer Vorderseite des Grundkörpers 17 ist eine Anlagefläche 21 ausgebildet, die im Wesentlichen durch eine ebene Oberfläche des Grundkörpers 17 gebildet wird. Auch wenn diese Oberfläche Vertiefungen sowie Bohrungen 23, 23' für Schrauben 25 aufweist und somit durchbrochen ist, wird durch diese Oberfläche die durchgehende Anlagefläche 21 definiert, an der das Faltschloss 13 anliegt, wenn es in der Halterung 11 aufgenommen ist (vgl. Fig. 2 und 4).

Die Anlagefläche 21 wird in Längsrichtung L zu einem Ende hin (in den Figuren links) durch einen Begrenzungsabschnitt 27 begrenzt, der derart schalenartig mit einer Krümmung um eine zu der Längsrichtung L quer verlaufenden Achse ausgebildet ist, dass das Faltschloss 13 zum Anlegen an die Anlagefläche 21 zunächst gewinkelt zur Anlagefläche 21 mit einem Endabschnitt 29 (vgl. Fig. 2) in den schalenartigen Begrenzungsabschnitt 27 eingesetzt und anschließend zur Anlagefläche 21 hin geschwenkt werden kann.

Dieser Begrenzungsabschnitt 27 dient jedoch nicht nur dazu, ein korrektes Einsetzen des Faltschlosses 13 in die Halterung 11 zu vereinfachen, sondern stützt das in die Halterung 11 aufgenommene Faltschloss 13 nach dem Einsetzen zudem in Längsrichtung L ab, so dass dessen Beweglichkeit in der Halterung 11 in Längsrichtung L begrenzt ist. Zur zusätzlichen Begrenzung der Beweglichkeit in die entgegengesetzte Richtung ist ein weiterer Begrenzungsabschnitt 31 vorgesehen, der jedoch anders als der genannte Begrenzungsabschnitt 27 nicht durch eine Art Wand mit einer der Dicke des Faltschlosses 13 entsprechenden Höhe gebildet wird, sondern lediglich durch eine senkrecht zur Längsrichtung L von der Anlagefläche 21 vorstehende Kante (vgl. Fig. 1 und 5). Dieser weitere Begrenzungsabschnitt 31 ist dazu ausgebildet, zwischen die Stäbe 33 und den Schlosskörper 35 des Faltschlosses 13 einzugreifen, wenn das Faltschloss 13 an die Anlagefläche 21 angelegt wird, um dadurch die Beweglichkeit des Faltschlosses 13 in Längsrichtung L zusätzlich zu begrenzen, insbesondere zusammen mit dem Begrenzungsabschnitt 27 vollständig zu verhindern.

Einer korrekten Ausrichtung der Faltschlosses 13 in der Halterung 11 insbesondere derart, dass eine Längserstreckung des Faltschlosses 13 parallel zur Längsrichtung L der Halterung 11 ist, dienen auch die seitlichen Führungsabschnitte 37, welche angrenzend an den Befestigungsabschnitt 27 als im Wesentlichen glatte von der Anlagefläche 21 vorstehende Wände ausgebildet sind und das Faltschoss 13 dadurch zumindest im Bereich von dessen Endabschnitt 29 quer zur Längsrichtung L begrenzen.

Zur weiteren seitlichen Begrenzung des Faltschlosses 13 in der Halterung 11 sowie insbesondere zur Sicherung des in der Halterung 11 aufgenommenen Faltschlosses 13 gegen ein Entnehmen oder Lösen (Herausfallen) sind zwei Schwenkklammern 39 vorgesehen, welche die Anlagefläche 21 quer zur Längsrichtung L flankieren. Die beiden Schwenkklammern 39 sind baugleich ausgebildet und an dem Grundkörper 17 schwenkbar um einen jeweilige Schwenkachse S gelagert. Dabei sind die beiden Schwenkachsen S parallel zur Längsrichtung L ausgerichtet. Die schwenkbare Lagerung der Schwenkklammern 39 an dem Grundkörper 17 erfolgt jeweils über einen Stift 41, der ortsfest an dem Grundkörper 17 befestigt ist, sich entlang der Schwenkachse S erstreckt und durch Lageraugen 43 der jeweiligen Schwenkklammer 39 geführt ist.

Wie im Vergleich der Fig. 1 und 2 mit den Fig. 3 und 4 zu erkennen ist, können die Schwenkklammern 39 um ihre jeweilige Schwenkachse S zwischen einer Freigabestellung (Fig. 1 und 3) und einer Sicherungsstellung (Fig. 2 und 4) geschwenkt werden. In der Freigabestellung der Schwenkklammern 39 ist der Raum oberhalb der Anlagefläche 21 insofern freigegeben, als die Schwenkklammern 39 nicht in diesen Raum eingreifen, so dass das Faltschloss 13 zwischen den Schwenkklammern 39 hindurchgeführt und an die Anlagefläche 21 angelegt werden kann, um es in die Halterung 11 aufzunehmen, bzw. von der Anlagefläche 21 gelöst werden kann, um es aus der Halterung 11 zu entnehmen.

In der Sicherungsstellung dagegen greifen die Schwenkklammern 39 in diesen Raum oberhalb der Anlagefläche 21 ein und sperren so ein Lösen des Faltschlosses 13 von der Anlagefläche 21, so dass das Faltschloss 13 durch die Schwencklammern 39 gegen ein Entnehmen aus der Halterung 11 gesichert ist. Insgesamt wird das in der Halterung 11 aufgenommene Faltschloss 13 dann durch die Schwenkklammern 39 in der Sicherungsstellung sowie durch die Begrenzungsabschnitte 27, 31 und die Führungsabschnitte 37 fest, insbesondere zumindest im Wesentlichen unbeweglich, in der Halterung 11 gehalten.

Wie vor allem in den Schnittdarstellungen der Fig. 3 und 4 zu erkennen ist, umfassen die Schwenkklammern 39 jeweils einen Halteschenkel 45 und einen Hebelschenkel 47, die zumindest abschnittsweise zumindest im Wesentlichen flächig ausgebildet sind. Dabei ist der Halteschenkel 45 gewinkelt ausgebildet und umfasst einen Radialabschnitt 49, der sich ausgehend von den Lageraugen 43 in (bezüglich der jeweiligen Schwenkachse S) zumindest vorwiegend radiale Richtung erstreckt, sowie einen Tangentialabschnitt 51, der sich an einem distalen (d.h. von der Schwenkachse S fernen) Ende 53 des Radialabschnitts 49 in zumindest vorwiegend tangentiale Richtung erstreckt.

In der Sicherungsstellung einer jeweiligen Schwenkklammer 39 sind der Radialabschnitt 49 und der Tangentialabschnitt 51 zumindest im Wesentlichen senkrecht bzw. parallel zur Anlagefläche 21 ausgerichtet. Da die Schwenkachsen S vergleichsweise weit außen, d.h. seitlich über die Ausdehnung der Anlagefläche 21 in Richtung quer zur Längsrichtung L vorstehend, angeordnet sind, kann der Radialabschnitt in der Sicherungsstellung seitlich an dem in der Halterung 11 aufgenommenen Faltschloss 13 anliegen (vgl. Fig. 4) und das Faltschloss 13 somit zusätzlich zu den Führungsabschnitten 37 quer zur Längsrichtung L einfassen. Der Tangentialabschnitt 51 ragt dabei in den Bereich oberhalb der Anlagefläche 21 vor und liegt an der Oberseite des Faltschlosses 13 an, so dass der gewinkelte Halteschenkel 45 eine Ecke des Faltschlosses 13 umgreift. Auf diese Weise wird das Faltschloss 13 zuverlässig an der Anlagefläche 21 und insgesamt in der Halterung 11 gehalten.

Der Tangentialabschnitt 51 ist gegenüber dem Radialabschnitt 49 vergleichsweise kurz, insbesondere kürzer als die halbe Länge des Radialabschnitts 49, so dass sich der Tangentialabschnitt 51 lediglich über einen Winkelbereich von etwa 25° um die Schwenkachse S erstreckt. Auf diese Weise brauchen sich die Freigabestellung und die Sicherungsstellung der Schwenkklammern 39 lediglich um einen entsprechenden Schwenkwinkel von etwa 25°, jedenfalls von vorzugsweise höchstens 30°, voneinander zu unterscheiden, damit das Faltschloss 13 in der Freigabestellung die Schwenkklammern 39 passieren kann und in der Sicherungsstellung der Schwenkklammern 39 von diesen bündig umgriffen wird.

Aufgrund der gewinkelten Form der Halteschenkel 45 der Schwenkklammern 39 und der Kürze der Tangentialabschnitte 51 wirken Kräfte, die das Faltschloss 13 in Richtung senkrecht von der Anlagefläche 21 weg auf die Schwenkklammern 39 ausübt, im Wesentlichen in bezüglich der jeweiligen Schwenkachse S radialer Richtung. Die auf die Tangentialabschnitte 51 ausgeübten Kräfte werden dabei über den Radialabschnitt 49 auf den am Grundkörper 17 fest angeordneten Stift 41 in radialer Richtung übertragen, so dass sie letztlich vom Grundkörper aufgenommen werden können. Drehmomente, insbesondere in Richtung eines Aufschwenkens der Schwenkklammer 39 in die Freigabestellung, werden dadurch nicht oder zumindest nur in geringem Maße hervorgerufen. Die besondere Form der Halteschenkel trägt somit nicht nur zu einem engen Umgreifen des Faltschlosses 13 bei, sondern auch dazu, ein ungewolltes Aufschwenken der Schwencklammern 39 und somit Freigeben des Faltschlosses 13 etwa infolge von Erschütterungen zu verhindern.

Am Übergang zwischen dem Radialabschnitt 49 und dem Tangentialabschnitt 51 des Halteschenkels 45 ist jeweils ein Angriffsabschnitt 55 im Bereich des distalen Endes 53 des Radialabschnitts 49 ausgebildet. Dieser Angriffsabschnitt 55 wird insbesondere dadurch gebildet, dass sich die Dicke des Tangentialabschnitts 51 ausgehend von dem Radialabschnitt 49, vorzugsweise lediglich auf der radial äu-ßeren und daher nicht das in der Halterung 11 aufgenommene Faltschloss 13 sperrenden Seite, verringert. Ein nach Art einer Eingriffsmulde ausgebildeter Angriffsabschnitt 55, wie er in den Figuren gezeigt ist, kann dann beispielsweise für eine manuelle Betätigung der Halterung 11 besonders komfortabel ergriffen werden.

Sind die Angriffsabschnitte 55, insbesondere die radial äußere Seite des Tangentialabschnitts 51 des Halteschenkels 45, (anders als in den Figuren gezeigt) in geeigneter Weise geformt, insbesondere abgeschrägt, können die Schwenkklammern 39 beispielsweise zum Einsetzen des Faltschlosses 13 in die Halterung 11 auch dadurch aufgeschwenkt werden, dass das Faltschloss 13 in Richtung zur Anlagefläche 21 hin bewegt wird und auf die Angriffsabschnitte 55 der Schwencklammern trifft, wobei dann diese Beaufschlagung durch die Form der Angriffsabschnitte 55 zu einem auf die Schwenkklammern wirkenden Drehmoment um die Schwenkachsen S in Richtung der Freigabestellung abgeleitet wird. Auf diese Weise kann das Einsetzen des Faltschlosses 13 noch komfortabler erfolgen, da die Halterung 11 nicht eigens aufgeschwenkt zu werden braucht, sondern die Schwenkklammern 39 sozusagen automatisch beim Einsetzen des Faltschlosses 13 auseinandergedrängt werden und den Weg für das Faltschloss 13 freigeben.

Wie der Halteschenkel 45 erstreckt sich auch der Hebelschenkel 47 einer jeweiligen Schwenkklammer 39 zumindest im Wesentlichen in bezüglich der Schwenkachse S radialer Richtung. Anders als der Halteschenkel 45 verläuft der Hebelschenkel 47 dabei aber nicht seitlich zur Anlagefläche 21, sondern zumindest im Wesentlichen unterhalb der Anlagefläche 21. An einem von der Schwenkachse S wegweisenden Ende des Hebelschenkels 47 ist dabei, vorzugsweise tangential zur Schwenkachse S, eine Beaufschlagungsfläche 57 ausgebildet.

Da die Halterung 11 zumindest im Wesentlichen spiegelsymmetrisch zu einer parallel zur Längsrichtung L und senkrecht zur Anlagefläche 21 ausgerichteten Ebene ist und die beiden baugleichen Schwenkklammern 39 nahezu spiegelsymmetrisch (eigentlich achssymmetrisch bezüglich einer senkrecht zur Anlagefläche ausgerichteten Spiegelachse) angeordnet sind, sind die Beaufschlagungsflächen 57 der unterhalb der Anlagefläche 21 verlaufenden Hebelschenkel 47 zumindest im Wesentlichen aufeinander zu ausgerichtet. Ihr Abstand voneinander hängt dabei von der jeweiligen Schwenkstellung der Schwenkklammern 39 ab. Mittels einer Federvorrichtung 59, die zwischen den beiden Beaufschlagungsflächen 57 angeordnet ist und als eine Druckfeder wirkt, werden die beiden Beaufschlagungsflächen 57 dabei in Richtung eines größeren Abstands voneinander vorspannt.

Sowohl in der in Fig. 3 gezeigten Freigabestellung als auch in der in Fig. 4 gezeigten Sicherungsstellung der beiden Schwenkklammern 39 ist der Abstand der Beaufschlagungsflächen 57 voneinander größer als in den dazwischen liegenden Schwenkstellungen. Insbesondere ist in einer Schwenkstellung, in welcher die Hebelschenkel 47 zumindest im Wesentlichen parallel zu einer die beiden Schwenkachsen S verbindenden Ebene ausgerichtet sind, der Abstand der Beaufschlagungsflächen 57 zueinander minimal. Durch diese Schwenkstellung, die sich vorzugsweise zumindest im Wesentlichen mittig zwischen der Freigabestellung und der Sicherungsstellung befindet, wird ein Totpunkt der Schwenkbarkeit der Schwenkklammern 39 definiert, da die Schwenkklammern 39 durch die Federvorrichtung 59 auf der zur Freigabestellung weisenden Seite des Totpunkts in Richtung der Freigabestellung vorgespannt werden und auf der zur Sicherungsstellung weisenden Seite des Totpunkts in Richtung der Sicherungsstellung vorgespannt werden.

Bei einem Schwenken der Schwenkklammern 39 über den Totpunkt hinweg läuft daher die Schwenkbewegung, sobald der Totpunkt überwunden ist, selbsttätig lediglich durch die Federvorrichtung 59 angetrieben ab. Bis zum Totpunkt dagegen erfolgt die Schwenkbewegung gegen die Vorspannung der Federvorrichtung 59. Die Federvorrichtung 59 wirkt somit einem Verstellen der Schwenkklammern 39 aus der jeweils eingenommenen Stellung entgegen und trägt dadurch dazu bei, ein ungewolltes Verstellen der Schwenkklammern 39, insbesondere ein unerwünschtes Aufschwenken der Schwenkklammern 39 infolge von Erschütterungen während des Fahrens, zu verhindern.

Die Federvorrichtung 59 umfasst bei der gezeigten Ausführungsform zwei nebeneinander in Richtung der Längsachse L angeordnete Schraubenfedern, die sich jeweils einerseits gegen die Beaufschlagungsfläche 57 der einen Schwenkklammer 39 und andererseits gegen die Beaufschlagungsfläche 57 der anderen Schwenkklammer 39 abstützen. Dabei sind die Schraubenfedern gegen ein Verrutschen durch stiftartige Vorsprünge in den Beaufschlagungsflächen 57 gesichert, welche in die Schraubenfedern eingreifen (in den Figuren nicht zu erkennen).

Benachbart zu den Beaufschlagungsflächen 57 sind an den Hebelschenkeln 47 der Schwenkklammern 39 Auslöseabschnitte 61 ausgebildet. Im Unterschied zu dem zumindest vorwiegend radial zur jeweiligen Schwenkachse S ausgerichteten Hebelabschnitt des Hebelschenkels 47, steht der Auslöseabschnitt 61 vom Hebelabschnitt (d.h. vom übrigen Hebelschenkel 47) in Umfangsrichtung vor. Dabei erstreckt sich der Auslöseabschnitt 61 von dem ansonsten zumindest im Wesentlichen unterhalb der Anlagefläche 21 verlaufenden Hebelschenkel 47 in Richtung zur Anlagefläche 21.

Je nach Schwenkstellung der Schwenkklammer 39 ragt der Auslöseabschnitt 61 dabei durch einen Durchgang in der die Anlagefläche 21 definierenden Oberfläche des Grundkörpers 17 hindurch, so dass er über die Anlagefläche 21 hinaus vorsteht. Dies ist sowohl in der Freigabestellung (vgl. Fig. 3) als auch im Totpunkt der Fall, was zur Folge hat, dass, wenn das Faltschloss 13 in die Halterung 11 eingesetzt und an die Anlagefläche 21 angelegt wird, der Auslöseabschnitt 61 bis über den Totpunkt hinaus zurückgedrängt wird und die Schwenkklammern 39 daher allein aufgrund der Vorspannung der Federvorrichtung 59 weiter bis in die Sicherungsstellung geschwenkt werden (vgl. Fig. 4). Auf diese Weise wird das Faltschloss 13 direkt beim Einsetzen in die Halterung 11 gegen ein Entnehmen oder Herausfallen automatisch gesichert.

Zu beiden Seiten (bezüglich der Längsrichtung L) der Beaufschlagungsfläche 57 ist an jedem Hebelschenkel 47 jeweils ein radialer Fortsatz 63 ausgebildet. Die beiden Fortsätze 63 einer jeweiligen Schwenkklammer 39 bilden einen Mitnehmer der Schwenkklammer 39. Dabei sind die beiden Fortsätze 63 einer jeweiligen Schwenkklammer 39 in Umfangsrichtung bezüglich der jeweiligen Schwenkachse S zueinander versetzt, so dass jeweils ein Fortsatz 63 der einen Schwenkklammer 39 einem Fortsatz 63 der anderen Schwenkklammer 39 in Umfangsrichtung vorausläuft und der andere Fortsatz 63 der einen Schwenkklammer 39 dem anderen Fortsatz 63 der anderen Schwenkklammer 39 in Umfangsrichtung nachläuft. Form und Versatz in Umlaufrichtung der Fortsätze 63 sind dabei derart, dass die Fortsätze 63 zumindest im Wesentlichen in jeder Schwenkstellung der Schwenkklammern 39 ineinandergreifen und paarweise in Kontakt zueinander sind.

Eine solche Anordnung hat dann den vorteilhaften Effekt, dass die Schwenkklammern 39 über die Mitnehmer 63 zu gemeinsamer Schwenkbewegung in entgegengesetzte Schwenkrichtung um ihre jeweilige Schwenkachse S miteinander gekoppelt sind. Das Verstellen einer der Schwenkklammern 39 hat somit zwangsläufig ein entsprechendes Verstellen der anderen Schwenkklammer 39 zur Folge. Dadurch wird zum einen sichergestellt, dass die Schraubenfedern 59 nicht zu stark geschert werden, so dass sie beiden Hebelschenkel 47 jeweils gleichartig beaufschlagen. Zum anderen reicht es für ein manuelles Verstellen der Halterung 11 somit aus, eine der Schwenkklammern 39 zu schwenken, da die andere über das Zusammenwirken der Mitnehmer 63 mitgeführt wird.

Die Halterung 11 ist in den Fig. 1 und 2 an einem Rahmenrohr 15 eines Zweirads befestigt dargestellt. Eine solche Befestigung der Halterung 11 kann auf verschiedene Weise erfolgen. Die gezeigte Ausführungsform der Halterung 11 weist dabei vorteilhafterweise mehrere alternative Möglichkeiten der Befestigung auf.

In Fig. 1 und 2 erfolgt die Befestigung der Halterung 11 über ein Adapterstück 65 (vgl. Fig. 5), das mittels einer straff um das Rahmenrohr 15 geschlungenen und geschlossenen Schelle 67 an dem Rahmenrohr 15 angebracht ist. Das Adapterstück 65 dient dazu, ein Gewinde für eine Schraube 25 bereitzustellen, die durch die Bohrung 23 des Grundkörpers 17 geführt ist, um den Grundkörper 17 der Halterung 11 mit dem Adapterstück 65 zu verschrauben.

In dem Grundkörper 17 sind ferner zwei weitere Bohrungen 23' ausgebildet, deren Abstand an den Abstand zweier im Rahmenrohr 15 (etwa für einen Flaschenhalter) vorgesehener Gewindebohrungen 69 (vgl. Fig. 5) angepasst ist, bei dem es sich um einen gängigen oder normierten Abstand handeln kann. Über diese Bohrungen 23' und geeignete Schrauben kann die Halterung 11 somit alternativ zu der Befestigung über das Adapterstück 65 auch direkt an dem Rahmenrohr 15 angeschraubt werden.

Des Weiteren ist in Fig. 5 zu erkennen, dass der Grundkörper 17 zwei quer zur Längsrichtung L verlaufende Durchgänge 71 aufweist, die einen flachen Querschnitt aufweisen und dazu ausgebildet sind, dass jeweils ein Befestigungsband (nicht dargestellt) hindurch geführt werden kann. Mittels solcher Befestigungsbänder kann die Halterung 11 dann an das Rahmenrohr 15 gebunden werden, wobei die Längenfestlegung des jeweiligen Befestigungsbandes für eine straffe Befestigung der Halterung 11 an dem Rahmenrohr 15 insbesondere nach Art eines Klettverschlusses erfolgen kann.

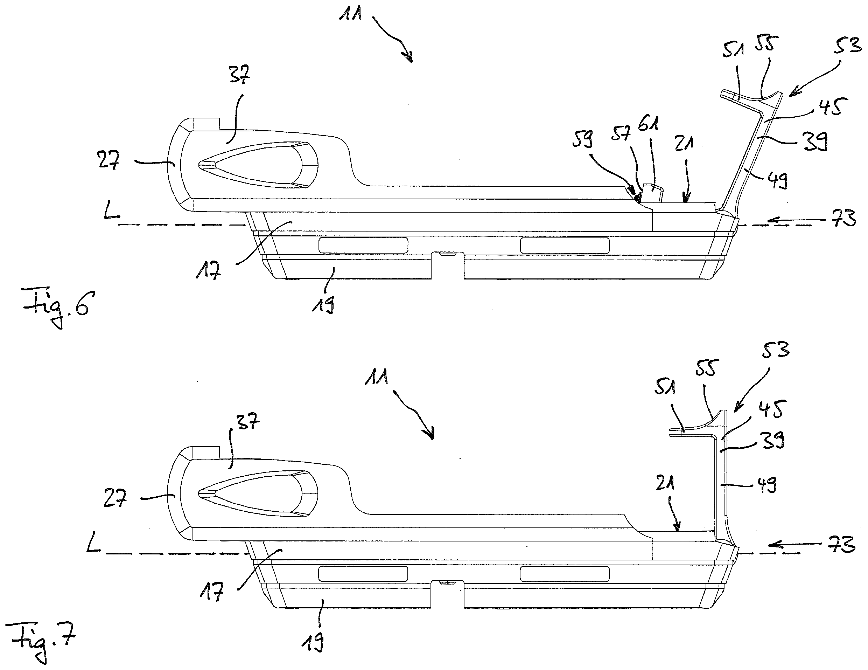

Die Fig. 6 und 7 zeigen eine alternative Ausführungsform einer Halterung 11, die der in den Fig. 1 bis 5 gezeigten Ausführungsform sehr ähnlich und für ein zumindest im Wesentlichen gleichartiges Faltschloss 13 geeignet ausgebildet ist. Der Hauptunterschied dieser alternativen Ausführungsform besteht darin, dass sie anstelle der zwei die Anlagefläche 21 flankierenden Schwenkklammern 39 eine einzige, an einer Stirnseite 73 (bezüglich der Längsrichtung L) des Grundkörpers 17 schwenkbar gelagerte Schwenkklammer 39 aufweist. Die Schwenkachse S dieser Schwenkklammer 39 ist somit zwar wie die jeweiligen Schwenkachsen S der beiden Schwenkklammern 39 bei der anderen Ausführungsform parallel zur Anlagefläche 21, im Unterschied dazu aber senkrecht zur Längsrichtung L ausgerichtet.

Durch eine solche Anordnung und Ausrichtung der Schwenkklammer 39 wird die Anlagefläche 21 von der Schwenkklammer 39 in Längsrichtung L begrenzt. Dabei ist es besonders vorteilhaft, wenn wie bei der gezeigten Ausführungsform der Begrenzungsabschnitt 27 und die Führungsabschnitte 37 eine Art Tasche ausbilden oder das Zweiradzubehör 13, wenn es in der Halterung 11 aufgenommen ist, zumindest derart umgeben, dass es im Wesentlichen nur dadurch von den Anlagefläche 21 entfernt werden kann, dass es in Längsrichtung L von dem Begrenzungsabschnitt 27 weg versetzt oder mit einem dem Begrenzungsabschnitt 27 in Längsrichtung L entgegengesetzten Endabschnitt von der Anlagefläche 21 weg geschwenkt wird. Diese beiden Bewegungen können dann bereits durch eine einzelne an der Stirnseite 73 des Grundkörpers 17 angeordnete Schwenkklammer 39 zuverlässig verhindert werden, so dass die Schwenkklammer 39 geeignet ist, das Zweiradzubehör 13 in der Halterung 11 zu sichern.

Grundsätzlich ist dabei nicht ausgeschlossen, dass weitere Schwenkklammern 39 vorgesehen sind. So ist etwa insbesondere eine Ausführungsform denkbar, die eine Kombination der in Fig. 1 bis 5 gezeigten Halterung 11 mit der in Fig. 6 und 7 gezeigten Halterung 11 ist und folglich sowohl zwei die Anlagefläche 21 quer zur Längsrichtung L flankierende Schwenkklammern 39 als auch eine an der Stirnseite 73 angeordnete Schwenkklammer 39 aufweist.

Die einzelne Schwenkklammer 39 der Ausführungsform gemäß Fig. 6 und 7 ist wiederum über einen Totpunkt hinweg zwischen einer Freigabestellung, die in Fig. 6 gezeigt ist, und einer Sicherungsstellung, die in Fig. 7 gezeigt ist, schwenkbar. Dabei ist auch hier eine Federvorrichtung 59 vorgesehen, welche die Schwencklammer 39 je nachdem, auf welcher Seite des Totpunktes sich die Schwencklammer 39 befindet, in die Freigabestellung oder die Sicherungsstellung vorspannt.

Die Federvorrichtung 59 beaufschlagt hierzu die Beaufschlagungsfläche 57 des Hebelschenkels 47 der Schwenkklammer 39 (der unterhalb der Anlagefläche 21 geführt ist und daher in Fig. 6 und 7 nicht zu sehen ist). Allerdings ist die Federvorrichtung 59 bei dieser Ausführungsform nicht zwischen den Hebelschenkeln 47 zweier Schwenkklammern 39 wirksam, sondern stützt sich gegen eine an dem Grundkörper 17 ausgebildete Beaufschlagungsfläche (in den Figuren nicht zu erkennen) ab. Auf diese Weise kann die Federvorrichtung 59, die bei der gezeigten Ausführungsform wiederum als Schraubenfeder ausgebildet ist, nach Art einer Druckfeder die Schwenkklammer 39 in Richtung eines größeren Abstands zwischen der Beaufschlagungsfläche 57 des Hebelschenkels 47 der Schwenkklammer 39 und der an dem Grundkörper 17 ausgebildeten Beaufschlagungsfläche vorspannen, wobei die Stellung geringsten Abstands den Totpunkt darstellt.

Wie in Fig. 6 zu erkennen ist, erstreckt sich in der Freigabestellung der Schwencklammer 39 der Auslöseabschnitt 61 am Hebelschenkel 47 der Schwenkklammer 39 durch die Anlagefläche 21 hindurch und steht dadurch über die Anlagefläche 21 nach oben vor. Durch Anlegen des Faltschlosses 13, für das die Halterung 11 vorgesehen ist, an die Anlagefläche 21, wird der Auslöseabschnitt 61 über den Totpunkt hinweg zurückgedrängt, so dass dann die Federvorrichtung 59 die Schwenkklammer 39 bis in die Sicherungsstellung (vgl. Fig. 7) schwenkt und anschließend in dieser Sicherungsstellung hält. Bei einem Aufschwenken der Schwenkklammer 39 in die Freigabestellung tritt der Auslöseabschnitt 61 wieder aus der Anlagefläche 21 vor und drängt somit das Faltschloss 13 von der Anlagefläche 21 ein Stück weit weg, so dass es leichter ergriffen werden kann, um vollständig aus der Halterung 11 entnommen zu werden. Somit sind auch bei dieser Ausführungsform mit lediglich einer Schwenkklammer 39 das Einsetzen des Faltschlosses 13 in die Halterung und das Entnehmen des Faltschlosses 13 aus der Halterung 11 besonders komfortabel.

### Bezugszeichenliste

- 11: Halterung
- 13: Faltschloss
- 15: Rahmenrohr
- 17: Grundkörper
- 19: Steg
- 21: Anlagefläche
- 23, 23': Bohrung
- 25: Schraube
- 27: Begrenzungsabschnitt
- 29: Endabschnitt
- 31: weiterer Begrenzungsabschnitt
- 33: Stäbe
- 35: Schlosskörper
- 37: Führungsabschnitt
- 39: Schwenkklammer
- 41: Stift
- 43: Lagerauge
- 45: Halteschenkel
- 47: Hebelschenkel
- 49: Radialabschnitt
- 51: Tangentialabschnitt
- 53: distales Ende
- 55: Angriffsabschnitt
- 57: Beaufschlagungsfläche
- 59: Federvorrichtung
- 61: Auslöseabschnitt
- 63: radialer Fortsatz, Mitnehmer
- 65: Adapterstück
- 67: Schelle
- 69: Gewindebohrung
- 71: Durchgang
- 73: Stirnseite

- L: Längsrichtung
- S: Schwenkachse

## Patentansprüche

1. Halterung (11) für ein Zweiradzubehör, insbesondere für ein Zweiradschloss, (13) umfassend
- einen Grundkörper (17), durch den eine Anlagefläche (21) definiert wird, an der das Zweiradzubehör (13) anliegt, wenn es in der Halterung (11) aufgenommen ist, sowie
- eine oder mehrere Schwenkklammern (39), die jeweils einen Halteschenkel (45) sowie einen Hebelschenkel (47) umfassen und über einen Totpunkt hinweg zwischen einer Freigabestellung und einer Sicherungsstellung um eine Schwenkachse (S) schwenkbar sind, um in der Freigabestellung ein Aufnehmen des Zweiradzubehörs (13) in die Halterung (11) oder ein Entnehmen des Zweiradzubehörs (13) aus der Halterung (11) zu ermöglichen und in der Sicherungsstellung das Zweiradzubehör (13), wenn es in der Halterung (11) aufgenommen ist, mittels des Halteschenkels (45) gegen ein Entnehmen aus der Halterung (11) zu sperren,
wobei eine den jeweiligen Hebelschenkel (47) beaufschlagende Federvorrichtung (59) vorgesehen ist, die dazu ausgebildet ist, die jeweilige Schwenkklammer (39) auf einer Seite des Totpunkts in die Freigabestellung und auf der anderen Seite des Totpunkts in die Sicherungsstellung vorzuspannen,
wobei die Schwenkachse (S) der jeweiligen Schwenkklammer (39) ortsfest ist,
wobei die Halterung (11) zwei Schwenkklammern (39) umfasst,
und wobei die Federvorrichtung (59) zwischen den Hebelschenkeln (47) der zwei Schwenkklammern (39) wirksam ist, was meint, dass die Federvorrichtung (59) bezüglich der Beaufschlagung des jeweils einen der zwei Hebelschenkel (47) an dem anderen der zwei Hebelschenkel (47) abgestützt ist, **dadurch gekennzeichnet,**
**dass** der jeweilige Hebelschenkel (47) einen Mitnehmer (63) aufweist, wobei der Mitnehmer (63) des Hebelschenkels (47) einer der Schwencklammern (39) und der Mitnehmer (63) des Hebelschenkels (47) einer anderen der Schwenkklammern (39) derart, insbesondere lose, ineinandergreifen, dass bei einem Schwenken der einen Schwenkklammer (39) die andere Schwenkklammer (39) um denselben Winkel in entgegengesetzte Richtung geschwenkt wird,
und wobei der Mitnehmer (63) des Hebelschenkels (47) der einen Schwencklammer (39) zumindest einen bezüglich der jeweiligen Schwenkachse (S) radialen Fortsatz (63) umfasst, der mit zumindest einem radialen Fortsatz (63) des Mitnehmers (63) des Hebelschenkels (47) der anderen Schwenkklammer (39) derart zusammenwirkt, dass er diesen Fortsatz (63) bei einem Verstellen in die Freigabestellung beaufschlagt und von diesem Fortsatz (63) zu einem Verstellen in die Sicherungsstellung beaufschlagt werden kann.

2. Halterung nach Anspruch 1,
**dadurch gekennzeichnet,**
**dass** der jeweilige Hebelschenkel (47) eine von der jeweiligen Schwenkachse (S) wegweisende Beaufschlagungsfläche (57) für die Beaufschlagung durch die Federvorrichtung (59) aufweist, wobei die Federvorrichtung (59) zwischen den Beaufschlagungsflächen (57) der Hebelschenkel der Schwenkklammern vorgesehen ist und die Beaufschlagungsflächen (57) als eine Druckfeder in Richtung voneinander weg vorspannt.

3. Halterung nach Anspruch 2,
**dadurch gekennzeichnet,**
**dass** die Federvorrichtung (59) durch zumindest eine Schraubenfeder, bevorzugt zwei benachbart angeordnete Schraubenfedern, gebildet wird, wobei die jeweilige Beaufschlagungsfläche (57) vorzugsweise mit zumindest einem Vorsprung versehen ist, der in eine jeweilige Schraubenfeder hineinragt, um die Schraubenfeder gegen ein seitliches Verrutschen zu sichern.

4. Halterung nach zumindest einem der vorstehenden Ansprüche,
**dadurch gekennzeichnet,**
**dass** der Hebelschenkel (47) zumindest einer Schwenkklammer (39) einen Auslöseabschnitt (61) aufweist, der in der Freigabestellung sowie vorzugsweise auch in einer dem Totpunkt entsprechenden Stellung, nicht aber in der Sicherungsstellung der jeweiligen Schwenkklammer (39) in Richtung von dem Grundkörper (17) weg über die Anlagefläche (21) hinaus vorsteht.

5. Halterung nach Anspruch 4,
**dadurch gekennzeichnet,**
**dass** der Auslöseabschnitt (61) von einem zumindest vorwiegend radial zur jeweiligen Schwenkachse (S) ausgerichteten Hebelabschnitt des jeweiligen Hebelschenkels (47) in Umfangsrichtung vorsteht, wobei, vorzugsweise, der Hebelabschnitt unabhängig von der Stellung der jeweiligen Schwenkklammer (39) unterhalb der Anlagefläche (21) angeordnet ist.

6. Halterung nach zumindest einem der vorstehenden Ansprüche,
**dadurch gekennzeichnet,**
**dass** der jeweilige Halteschenkel (45) gewinkelt ausgebildet ist und einen Radialabschnitt (49), der sich bezüglich der jeweiligen Schwenkachse (S) in zumindest vorwiegend radiale Richtung erstreckt, sowie einen Tangentialabschnitt (51), der sich an einem distalen Ende (53) des Radialabschnitts (49) in zumindest vorwiegend tangentiale Richtung erstreckt, umfasst, um das Zweiradzubehör (13), wenn es in der Halterung (11) aufgenommen ist, gegen ein Entnehmen aus der Halterung (11) zu sperren, wenn sich die jeweilige Schwenkklammer (39) in der Sicherungsstellung befindet.

7. Halterung nach Anspruch 6,
**dadurch gekennzeichnet,**
**dass** der jeweilige Tangentialabschnitt (51) in der Sicherungsstellung parallel zur Anlagefläche (21) ausgerichtet ist,
und/oder
**dass** sich der jeweilige Tangentialabschnitt (51) in der Freigabestellung außerhalb eines Raums befindet, der alle Punkte umfasst, die sich senkrecht über der Anlagefläche (21) befinden.

8. Halterung nach Anspruch 6 oder 7,
**dadurch gekennzeichnet,**
**dass** die tangentiale Erstreckung des jeweiligen Tangentialabschnitts (51) kürzer als sein halber radialer Abstand von der jeweiligen Schwenkachse (S) ist
und/oder
**dass** sich der jeweilige Tangentialabschnitt (51) über einen Winkelbereich von höchstens 30°, insbesondere von etwa 25°, um die jeweilige Schwenkachse (S) erstreckt.

9. Halterung nach zumindest einem der vorstehenden Ansprüche,
**dadurch gekennzeichnet,**
**dass** die Halterung (11) zwei Schwenkklammern (39) umfasst, die derart aneinander zwangsgeführt sind, dass bei einem Schwenken der einen Schwenkklammer (39) um ihre Schwenkachse (S) die andere Schwencklammer (39) um deren Schwenkachse (S) um denselben Winkel in entgegengesetzte Richtung geschwenkt wird,
und/oder
**dass** die Halterung (11) mehrere Schwenkklammern (39) umfasst, die zueinander baugleich sind, und vorzugsweise zumindest zwei Schwenkklammern (39) achssymmetrisch, insbesondere bezüglich einer senkrecht zur Anlagefläche (21) ausgerichteten Spiegelachse, zueinander angeordnet sind.

10. Halterung nach zumindest einem der vorstehenden Ansprüche,
**dadurch gekennzeichnet,**
**dass** sich die Anlagefläche (21) des Grundkörpers (17) entlang einer Längsrichtung (L) erstreckt.

11. Halterung nach Anspruch 10,
**dadurch gekennzeichnet,**
**dass** die Halterung (11) zwei Schwenkklammern (39) umfasst, welche die Anlagefläche (21) quer zu der Längsrichtung (L) flankieren, wobei die Schwenkachsen (39) der zwei Schwenkklammern (39) vorzugsweise parallel zur Längsrichtung (L) ausgerichtet sind,
und/oder
**dass** der Grundkörper (17) ferner einen Begrenzungsabschnitt (27) aufweist, der von der Anlagefläche (21) vorsteht und die Anlagefläche (21) in Längsrichtung (L) begrenzt, wobei der Begrenzungsabschnitt (27) vorzugsweise derart schalenartig ausgebildet ist, dass das Zweiradzubehör (13) zum Anlegen an die Anlagefläche (21) zunächst gewinkelt zur Anlagefläche (21) mit einem Endabschnitt (29) in den schalenartigen Begrenzungsabschnitt (27) eingesetzt und anschließend zur Anlagefläche (21) hin geschwenkt werden kann,
und/oder
**dass** der Grundkörper (17) ferner einen oder mehrere Führungsabschnitte (37) aufweist, welche von der Anlagefläche (21) vorstehen und die Anlagefläche (21) zumindest abschnittsweise quer zur Längsrichtung (L) begrenzen.

12. Zweiradzubehör, insbesondere Zweiradschloss, (13) mit einer für das Zweiradzubehör (13) geeignet ausgebildeten Halterung (11) nach einem der vorstehenden Ansprüche.

## Claims

1. A holder (11) for a two-wheeler accessory, in particular for a two-wheeler lock (13), comprising
- a base body (17) by which a contact surface (21) is defined which the two-wheeler accessory (13) contacts when it is received in the holder (11); and
- one or more pivot clips (39) which each comprise a holding limb (45) and a lever limb (47) and are pivotable about a pivot axis (S) beyond a dead center between a release position and a securing position to allow a receiving of the two-wheeler accessory (13) in the holder (11) or a removal of the two-wheeler accessory (13) from the holder (11) in the release position and to block the two-wheeler accessory (13) against a removal from the holder (11) in the securing position by means of the holding limb (45) when said two-wheeler accessory is received in the holder (11),
wherein a spring apparatus (59) is provided which acts on the respective lever limb (47) and which is configured to preload the respective pivot clip (39) into the release position at one side of the dead center and into the securing position at the other side of the dead center,
wherein the pivot axis (S) of the respective pivot clip (39) is stationary, wherein the holder (11) comprises two pivot clips (39),
and wherein the spring apparatus (59) is effective between the lever limbs (47) of the two pivot clips (39), which means that the spring apparatus (59) is supported with respect to the action on the respective one of the two lever limbs (47) at the other one of the two lever limbs (47),
**characterized in that**
the respective lever limb (47) has an entrainer (63),
wherein the entrainer (63) of the lever limb (47) of one of the pivot clips (39) and the entrainer (63) of the lever limb (47) of another one of the pivot clips (39) engage into one another, in particular loosely, such that, on a pivoting of the one pivot clip (39), the other pivot clip (39) is pivoted in the opposite direction about the same angle,
and wherein the entrainer (63) of the lever limb (47) of the one pivot clip (39) comprises at least one radial prolongation (63) with respect to the respective pivot axis (S) that cooperates with at least one radial prolongation (63) of the entrainer (63) of the lever limb (47) of the other pivot clip (39) such that it acts on this prolongation (63) on an adjustment into the release position and can be acted on by this prolongation (63) to make an adjustment into the securing position.

2. A holder according to claim 1,
**characterized in that**
the respective lever limb (47) has an application surface (57) facing away from the respective pivot axis (S) for the application by the spring apparatus (59), with the spring apparatus (59) being provided between the application surfaces (57) of the lever limbs of the pivot clips and preloading the application surfaces (57) in a direction away from one another as a compression spring.

3. A holder according to claim 2,
**characterized in that**
the spring apparatus (59) is formed by at least one helical spring, preferably by two helical springs arranged adjacent,
wherein the respective application surface (57) is preferably provided with at least one projection which projects into a respective helical spring to secure the helical spring against lateral slippage.

4. A holder according to at least one of the preceding claims,
**characterized in that**
the lever limb (47) of at least one pivot clip (39) has a release section (61) which projects beyond the contact surface (21) in a direction away from the base body (17) in the release position and preferably also in a position corresponding to the dead center, but not in the securing position of the respective pivot clip (39).

5. A holder according to claim 4,
**characterized in that**
the release section (61) projects in the peripheral direction from a lever section of the respective lever limb (47) aligned at least primarily radially with respect to the respective pivot axis (S),
wherein, preferably, the lever section is arranged beneath the contact surface (21) independently of the position of the respective pivot clip (39).

6. A holder according to at least one of the preceding claims,
**characterized in that**
the respective holding limb (45) is angled and comprises a radial section (49), which extends in at least primarily a radial direction with respect to the respective pivot axis (S), and a tangential section (51), which extends in at least primarily a tangential direction at a distal end (53) of the radial section (49), to block the two-wheeler accessory (13) against a removal from the holder (11) when said two-wheeler accessory is received in the holder (11) when the respective pivot clip (39) is in the securing position.

7. A holder according to claim 6,
**characterized in that**
the respective tangential section (51) is aligned in parallel with the contact surface (21) in the securing position;
and/or
**in that**, in the release position, the respective tangential section (51) is located outside a space which comprises all the points that are located perpendicular above the contact surface (21).

8. A holder according to claim 6 or 7,
**characterized in that**
the tangential extent of the respective tangential section (51) is shorter than half its radial spacing from the respective pivot axis (S);
and/or
**in that** the respective tangential section (51) extends over an angular range of at most 30°, in particular of approximately 25°, about the respective pivot axis (S).

9. A holder according to at least one of the preceding claims,
**characterized in that**
the holder (11) comprises two pivot clips (39) which are compulsorily guided with respect to one another such that, on a pivoting of the one pivot clip (39) about its pivot axis (S), the other pivot clip (39) is pivoted in the opposite direction about the same angle about its pivot axis (S);
and/or
**in that** the holder (11) comprises a plurality of pivot clips (39) which are of the same construction with respect to one another, and at least two pivot clips (39) are preferably arranged axially symmetrically with respect to one another, in particular with respect to an axis of reflection aligned perpendicular to the contact surface (21).

10. A holder according to at least one of the preceding claims,
**characterized in that**
the contact surface (21) of the base body (17) extends along a longitudinal direction (L).

11. A holder according to claim 10,
**characterized in that**
the holder (11) comprises two pivot clips (39) which flank the contact surface (21) transversely to the longitudinal direction (L), with the pivot axes (39) of the two pivot clips (39) preferably being aligned in parallel with the longitudinal direction (L);
and/or
**in that** the base body (17) furthermore has a boundary section (27) which projects from the contact surface (21) and bounds the contact surface (21) in the longitudinal direction (L), with the boundary section (27) preferably being configured like a shell such that, for the application at the contact surface (21), an end section (29) of the two-wheeler accessory (13) can first be inserted into the shell-like boundary section (27) at an angle to the contact surface (21) and can subsequently be pivoted toward the contact surface (21);
and/or
**in that** the base body (17) furthermore has one or more guide sections (37) which project from the contact surface (21) and bound the contact surface (21) at least sectionally transversely to the longitudinal direction (L).

12. A two-wheeler accessory, in particular a two-wheeler lock (13), comprising a holder (11) according to any one of the preceding claims which is configured to be suitable for the two-wheeler accessory (13).

## Revendications

1. Support (11) pour un accessoire pour deux-roues, en particulier pour un antivol pour deux-roues (13), comprenant
- un corps de base (17) qui définit une surface d'appui (21) contre laquelle l'accessoire pour deux-roues (13) s'appuie lorsqu'il est reçu dans le support (11), ainsi que
- une ou plusieurs pinces pivotantes (39) qui comprennent chacune une branche de retenue (45) et une branche de levier (47) et qui peuvent pivoter autour d'un axe de pivotement (S) au-delà d'un point mort entre une position de libération et une position de blocage, afin de permettre, dans la position de libération, la réception de l'accessoire pour deux-roues (13) dans le support (11) ou le retrait de l'accessoire pour deux-roues (13) du support (11), et de bloquer, dans la position de blocage, l'accessoire pour deux-roues (13), lorsqu'il est reçu dans le support (11), au moyen de la branche de retenue (45), afin qu'il ne puisse pas être retiré du support (11),
dans lequel
il est prévu un dispositif à ressort (59) sollicitant la branche de levier (47) respective, qui est conçu pour précontraindre la pince pivotante (39) respective d'un côté du point mort vers la position de libération, et de l'autre côté du point mort vers la position de blocage,
l'axe de pivotement (S) de la pince pivotante (39) respective est stationnaire,
le support (11) comprend deux pinces pivotantes (39), et
le dispositif à ressort (59) est actif entre les branches de levier (47) des deux pinces pivotantes (39), ce qui signifie que le dispositif à ressort (59) est soutenu, en termes de sollicitation de l'une des deux branches de levier (47), par l'autre des deux branches de levier (47),
**caractérisé en ce que**
la branche de levier (47) respective présente un entraîneur (63), l'entraîneur (63) de la branche de levier (47) de l'une des pinces pivotantes (39) et l'entraîneur (63) de la branche de levier (47) d'une autre des pinces pivotantes (39) s'engageant l'un dans l'autre, en particulier de façon lâche, de telle sorte que lors d'un pivotement de l'une des pinces pivotantes (39), l'autre pince pivotante (39) pivote du même angle dans la direction opposée, et l'entraîneur (63) de la branche de levier (47) de l'une des pinces pivotantes (39) comprend au moins un prolongement (63) radial par rapport à l'axe de pivotement (S) respectif, qui coopère avec au moins un prolongement radial (63) de l'entraîneur (63) de la branche de levier (47) de l'autre pince pivotante (39) de telle sorte qu'il sollicite ce prolongement (63) lors d'un déplacement vers la position de libération et peut être sollicité par ce prolongement (63) pour un déplacement vers la position de blocage.

2. Support selon la revendication 1,
**caractérisé en ce que**
la branche de levier respective (47) présente une surface de sollicitation (57), détournée de l'axe de pivotement respectif (S), pour la sollicitation par le dispositif à ressort (59), le dispositif à ressort (59) étant prévu entre les surfaces de sollicitation (57) des branches de levier des pinces pivotantes et mettant sous précontrainte, à la manière d'un ressort de compression, les surfaces de sollicitation (57) en éloignement l'une de l'autre.

3. Support selon la revendication 2,
**caractérisé en ce que**
le dispositif à ressort (59) est formé par au moins un ressort hélicoïdal, de préférence par deux ressorts hélicoïdaux disposés de manière adjacente, la surface de sollicitation (57) respective étant de préférence pourvue d'au moins une saillie qui pénètre dans un ressort hélicoïdal respectif, afin d'empêcher le ressort hélicoïdal de glisser latéralement.

4. Support selon l'une au moins des revendications précédentes,
**caractérisé en ce que**
la branche de levier (47) d'au moins une pince pivotante (39) présente une portion de déclenchement (61) qui, dans la position de libération ainsi que de préférence également dans une position correspondant au point mort, mais non pas dans la position de blocage de la pince pivotante respective (39), fait saillie en éloignement du corps de base (17) au-delà de la surface d'appui (21).

5. Support selon la revendication 4,
**caractérisé en ce que**
la portion de déclenchement (61) fait saillie dans la direction circonférentielle à partir d'une portion de levier de la branche de levier respective (47) orientée au moins principalement radialement par rapport à l'axe de pivotement respectif (S),
de préférence, la portion de levier est disposée au-dessous de la surface d'appui (21), indépendamment de la position de la pince pivotante respective (39).

6. Support selon l'une au moins des revendications précédentes,
**caractérisé en ce que**
la branche de retenue respective (45) est réalisée sous forme coudée et comprend une portion radiale (49) qui s'étend au moins principalement dans la direction radiale par rapport à l'axe de pivotement respectif (S), ainsi qu'une portion tangentielle (51) qui, à une extrémité distale (53) de la portion radiale (49), s'étend dans une direction au moins principalement tangentielle, afin de bloquer l'accessoire pour deux-roues (13), lorsqu'il est reçu dans le support (11), pour empêcher qu'il ne soit retiré du support (11), lorsque la pince pivotante (39) respective est dans la position de blocage.

7. Support selon la revendication 6,
**caractérisé en ce que**
dans la position de blocage, la portion tangentielle respective (51) est orientée parallèlement à la surface d'appui (21),
et/ou
dans la position de libération, la portion tangentielle respective (51) est située à l'extérieur d'un espace comprenant tous les points situés à l'aplomb de la surface d'appui (21).

8. Support selon la revendication 6 ou 7,
**caractérisé en ce que**
l'extension tangentielle de la portion tangentielle respective (51) est plus courte que la moitié de sa distance radiale par rapport à l'axe de pivotement respectif (S),
et/ou
**en ce que** la portion tangentielle respective (51) s'étend sur une plage angulaire de 30° au maximum, en particulier d'environ 25°, autour de l'axe de pivotement respectif (S).

9. Support selon l'une au moins des revendications précédentes,
**caractérisé en ce que**
le support (11) comprend deux pinces pivotantes (39) qui sont guidées à force l'une contre l'autre de telle sorte que, lorsqu'une pince pivotante (39) pivote autour de son axe de pivotement (S), l'autre pince pivotante (39) pivote autour de son axe de pivotement (S) du même angle dans la direction opposée,
et/ou
**en ce que** le support (11) comprend plusieurs pinces pivotantes (39) qui sont de construction identique les unes aux autres, et de préférence au moins deux pinces pivotantes (39) sont disposées à symétrie axiale, en particulier par rapport à un axe de symétrie orienté perpendiculairement à la surface d'appui (21).

10. Support selon l'une au moins des revendications précédentes,
**caractérisé en ce que**
la surface d'appui (21) du corps de base (17) s'étend selon une direction longitudinale (L).

11. Support selon la revendication 10,
**caractérisé en ce que**
le support (11) comprend deux pinces pivotantes (39) qui flanquent la surface d'appui (21) transversalement à la direction longitudinale (L), les axes de pivotement (39) des deux pinces pivotantes (39) étant de préférence orientés parallèlement à la direction longitudinale (L),
et/ou
**en ce que** le corps de base (17) comprend en outre une portion de délimitation (27) qui fait saillie de la surface d'appui (21) et qui délimite la surface d'appui (21) dans la direction longitudinale (L), la portion de délimitation (27) étant de préférence réalisée en forme de coque de telle sorte que l'accessoire pour deux-roues (13), afin de s'appliquer contre la surface d'appui (21), peut être inséré dans la portion de délimitation (27) en forme de coque en formant d'abord un angle par rapport à la surface d'appui (21) avec une portion d'extrémité (29) et peut ensuite être pivoté vers la surface d'appui (21),
et/ou
**en ce que** le corps de base (17) présente en outre une ou plusieurs portions de guidage (37) qui font saillie de la surface d'appui (21) et délimitent au moins localement la surface d'appui (21) transversalement à la direction longitudinale (L).

12. Accessoire pour deux-roues, en particulier antivol pour deux-roues, (13) comprenant un support (11) selon l'une des revendications précédentes, conçu de manière appropriée pour l'accessoire pour deux-roues (13).
